# EUROPÄISCHE PATENTSCHRIFT

(11) **EP 3 031 093 B1**
(45) Veröffentlichungstag und Bekanntmachung des Hinweises auf die Patenterteilung: **30.01.2019**
(21) Anmeldenummer: 14741548.3
(22) Anmeldetag: 11.07.2014
(51) Int. Cl.: H01M 8/0271, H01M 8/0286

(54) **VERFAHREN ZUR HERSTELLUNG EINER BRENNSTOFFZELLE UND EINES BRENNSTOFFZELLENSYSTEMS**
METHOD FOR PRODUCING A FUEL CELL AND A FUEL CELL SYSTEM
PROCÉDÉ DE FABRICATION D'UNE CELLULE DE COMBUSTIBLE ET D'UN SYSTÈME DE CELLULES DE COMBUSTIBLE

(30) Priorität: 07.08.2013 DE 102013215605
(43) Veröffentlichungstag der Anmeldung: 15.06.2016
(73) Patentinhaber: Bayerische Motoren Werke Aktiengesellschaft, 80809 München (DE)
(72) Erfinder: HAASE, Stefan, 80807 München (DE); SCHMID, Johannes, 81375 München (DE)
(86) Internationale Anmeldenummer: PCT/EP2014/064993
(87) Internationale Veröffentlichungsnummer: WO 2015/018603

(56) Entgegenhaltungen:
- WO-A1-2012/039699
- WO-A1-2012/102724
- US-A1- 2005 058 878
- US-A1- 2011 203 721
- US-A1- 2011 229 790
- US-A1- 2011 305 976

## Beschreibung

Die vorliegende Erfindung betrifft Verfahren zur Herstellung einer Brennstoffzelle sowie eines Brennstoffzellensystems, bei denen eine in der Brennstoffzelle bzw. in dem Brennstoffzellensystem enthaltene Gasdiffusionsschicht und/oder etwaig vorgesehene Kühlkanäle abgedichtet werden. Ferner betrifft die vorliegende Erfindung die Verwendung einer an einer Gasdiffusionsschicht der Brennstoffzelle angebrachten Sperrschicht.

In einem Brennstoffzellensystem werden einzelne Brennstoffzellen in Reihe zu einem Brennstoffzellenstapel geschaltet um eine höhere Spannung zu erreichen. An jedem Ende eines Brennstoffzellenstapels befindet sich eine Endplatte. Zwischen der Endplatte und dem Brennstoffzellenstapel befindet sich ein Stromabnehmer (meist aus Kupfer), der den elektrischen Strom aller Brennstoffzellen sammelt und vom Brennstoffzellenstapel ableitet. Die Brennstoffzellen enthalten jeweils eine Membranelektrodenanordnung, die zwischen eine kathodenseitige und eine anodenseitige Gasdiffusionsschicht eingebracht ist, wobei auf der der Membranelektrodenanordnung abgewandten Seite der Gasdiffusionsschichten jeweils eine Bipolarplatte angeordnet ist. Die Gasdiffusionsschichten sind gegenüber den Bipolarplatten und den Membranelektrodenanordnungen zurückgesetzt. Die Gasdiffusionsschichten enthalten Reaktionsfluidzuführbereiche zum Transport der Reaktionsgase und/oder Flüssigkeiten zu den Elektroden und Rekationsfluidabführbereiche, zum Abtransport von Reaktionsgasen und/oder Flüssigkeiten von den Elektroden. Oftmals sind im Bereich der Bipolarplatten der Brennstoffzellen auch Kühlkanäle zum Transport von Kühlmitteln vorgesehen. Zur Abdichtung der jeweiligen gas- bzw. fluidführenden Schichten oder Kanäle der Brennstoffzellen müssen Dichtungen vorgesehen werden, die gedruckt, geklebt oder eingelegt werden. Beispielsweise werden hierzu Dichtungen beidseitig auf die Bipolarplatten oder die Membranelektrodenanordnung aufgebracht, um die dazwischenliegende Gasdiffusionsschicht oder ggf. auch vorgesehene Kühlkanäle abzudichten, d.h. einen Austritt von Gas oder anderen Reaktionsfluiden oder weiteren Flüssigkeiten, wie z.B. Kühlflüssigkeiten, zu verhindern. Die Dichtungen haben eine vordefinierte Höhe oder Dicke und werden einzeln auf jede Bipolarplatte oder Membranelektrodenanordnung aufgebracht. Dies birgt den Nachteil, dass gerade bei großen Toleranzen der Komponenten der Brennstoffzelle oder bei geringen Dichtungsdicken eine Dichtigkeit des Systems nur schwer zu gewährleisten ist, wobei die Einzelapplikation der Dichtungen sehr aufwendig ist und die Kosten des Fertigungsprozesses verteuert. Um Leckagen vorzubeugen werden daher höhere Dichtungslinien verwendet, die die Toleranzen aller Komponenten maximal abdecken sollen, wodurch der Materialeinsatz steigt und der Durchflussbereich der Gase und Flüssigkeiten - allgemein der Fluide, verringert wird. Durch Letzteres steigt der Druckverlust des Mediums, was zu großen Verlusten in den BoP-Komponenten (Balance of Plant Komponenten) führt und den Systemwirkungsgrad verringert. Die Druckschriften US 2011/229790 A1 und WO 2012/102724 A1 offenbaren vorbekannte Technologien. Ausgehend von diesem Stand der Technik ist es daher Aufgabe der vorliegenden Erfindung Verfahren zur Herstellung einer Brennstoffzelle bzw. eines Brennstoffzellensystems anzugeben, durch die auf einfache und kostensparende Weise eine effektive, also gasdichte bzw. flüssigkeitsdichte (im Folgenden zusammengefasst als "fluiddicht") Abdichtung einer Gasdiffusionsschicht und/oder eines vorgesehenen Kühlkanals, erzielt wird. Diese Aufgabe wird bei einem ersten Verfahren zur Herstellung einer Brennstoffzelle, mit einem Schritt des Anordnens je einer Gasdiffusionsschicht mit je einer Bipolarplatte, auf jeweils einer Seite einer Membranelektrodenanordnung, die eine Anode, eine Kathode und eine zwischen der Anode und der Kathode angeordnete Elektrolytmembran umfasst, wobei die Gasdiffusionsschichten gegenüber den Bipolarplatten und der Membranelektrodenanordnung zurückgesetzt sind, wobei die Gasdiffusionsschichten jeweils mindestens einen Reaktionsfluidzuführbereich und jeweils mindestens einen Reaktionsfluidabführbereich sowie jeweils mindestens einen Reaktionsfluidabdichtbereich aufweisen, erfindungsgemäß durch den weiteren Schritt des Einspritzens eines Dichtungsmaterials in mindestens einen Reaktionsfluidabdichtbereich mindestens einer Gasdiffusionsschicht derart, dass die Gasdiffusionsschicht (2, 3) nach außen abgedichtet wird, gelöst. Das eingespritzte Dichtungsmaterial kommt durch das Einspritzen so zu liegen, dass eine hohe Dichtheit der Gasdiffusionsschicht gegenüber Fluiden erzielt wird, wobei der Reaktionsfluidzuführbereich sowie der Reaktionsfluidabführbereich nicht abgedichtet werden.

Ferner wird die Aufgabe auch durch ein zweites Verfahren zur Herstellung einer Brennstoffzelle mit dem Schritt des Anordnens je einer Gasdiffusionsschicht mit je einer Bipolarplatte, auf jeweils einer Seite einer Membranelektrodenanordnung, die eine Anode, eine Kathode und eine zwischen der Anode und der Kathode angeordnete Elektrolytmembran umfasst, wobei die Gasdiffusionsschichten gegenüber den Bipolarplatten und der Membranelektrodenanordnung zurückgesetzt sind, wobei die Gasdiffusionsschichten jeweils mindestens einen Reaktionsfluidzuführbereich und jeweils mindestens einen Reaktionsfluidabführbereich aufweisen und mindestens eine Bipolarplatte mindestens einen Kühlkanal mit mindestens einem Kühlmittelzuführbereich, mindestens einem Kühlmittelabführbereich und mindestens einem Kühlkanalabdichtbereich aufweist, erfindungsgemäß durch den Schritt des Einspritzens eines Dichtungsmaterials in mindestens einen Kühlkanalabdichtbereich mindestens einer Bipolarplatte derart, dass der Kühlkanal nach außen abgedichtet wird, gelöst.

Eine Gasdiffusionsschicht im Sinne der Erfindung umfasst herkömmliche Gasdiffusionsschichten aber auch mikroporöse Schichten oder schaumartige Materialien. Die Reaktionsfluidzuführbereiche und Reaktionsfluidabführbereiche können von außerhalb der Brennstoffzelle gespeist werden (external manifold) oder können in Bereiche der Brennstoffzelle, insbesondere der Bipolarplatten, integriert sein (internal manifold). Das Einspritzen des Dichtungsmaterials ist ein zeiteffizientes Verfahren durch das Dichtungslinien schnell mit spezifischer, auf den abzudeckenden Bereich abgestimmter Höhe, unter gleichzeitiger Berücksichtigung und lokaler Kompensation von Material- und Fertigungstoleranzen der Brennstoffzellenkomponenten präzise aufgebracht werden können. Der erfindungswesentliche Schritt des Einspritzens von Dichtungsmaterial kann analog auf alle Gasdiffusionsschichten oder Kühlkanäle der Brennstoffzelle angewendet werden. Somit wird auf einfache, kostengünstige und materialsparende Weise eine Brennstoffzelle mit sehr hoher Fluiddichtigkeit bereitgestellt.

Die Unteransprüche beinhalten vorteilhafte Weiterbildungen und Ausgestaltungen der Erfindung.

Gemäß einer vorteilhaften Weitebildung des ersten erfindungsgemäßen Verfahrens wird an mindestens einer Bipolarplatte mindestens ein Kühlkanal mit mindestens einem Kühlmittelzuführbereich und mindestens einem Kühlmittelabführbereich vorgesehen. Der Kühlkanal kann die Bipolarplatte flankieren und/oder in der Bipolarplatte integriert sein. Der Kühlkanal dient dem Führen von Kühlmittel und damit dem Abtransport von Wärme aus der Brennstoffzelle.

Eine weitere vorteilhafte Weiterbildung des ersten erfindungsgemäßen Verfahrens sieht vor, dass an der einen Kühlkanal mit mindestens einem Kühlmittelzuführbereich und mindestens einem Kühlmittelabführbereich aufweisenden Bipolarplatte, mindestens ein Kühlkanalabdichtbereich vorgesehen wird und Dichtungsmaterials in mindestens einen Kühlkanalabdichtbereich der Bipolarplatte derart eingespritzt wird, so dass der Kühlkanal nach außen abgedichtet wird. Somit werden nicht nur die Gasdiffusionsschichten fluiddicht abgedichtet, sondern auch die Kühlkanäle, was einen ungewünschten Austritt von Kühlmittel effektiv verhindert und den Betrieb der Brennstoffzelle sicherer gestaltet.

Eine vorteilhafte Weiterbildung sieht vor, dass das Einspritzen des Dichtungsmaterials an einen Reaktionsfluidabdichtbereich mindestens einer Gasdiffusionsschicht und/oder an mindestens einen Kühlkanalabdichtbereich der Bipolarplatte auch ein Einspritzen an eine Seitenfläche der Gasdiffusionsschicht und/oder eine Seitenfläche des Kühlkanals umfasst. Hierdurch wird eine besonders gute Abdichtung der Gasdiffusionsschicht und/oder des Kühlkanals erzielt.

Weiter vorteilhaft ist vorgesehen, dass das Einspritzen mittels einer oder mehrerer seitlich an der Brennstoffzelle angeordneten und/oder mindestens teilweise in den Reaktionsfluidabdichtbereich und/oder Kühlkanalabdichtbereich eingebrachten Düsen erfolgt. Durch die Verwendung von seitlich angeordneten Düsen können Dichtlinien mit hoher Präzision, Dicke und Höhe erstellt werden. Sofern die Düsen mindestens teilweise in den Reaktionsfluidabdichtbereich und/oder Kühlkanalabdichtbereich eingebracht sind, können die Dichtlinien besser und einfacher z.B. direkt an eine Seitenfläche der Gasdiffusionsschicht, angespritzt werden, so dass Dichtungsmaterial weniger am leicht zugänglichen Rand der Bipolarplatte, sondern direkt an der abzudichtenden fluidführenden Schicht zu liegen kommt.

Zur gleichmäßigeren und vollständigeren Abdichtung der gasführenden Schicht kann die Düse während des Einspritzens des Dichtungsmaterials bewegt werden. Besonders vorteilhaft ist dabei ein Schwenken oder Kippen der Düse unter Änderung des Einspritzwinkels des Dichtungsmaterials. Hierdurch können auch die schwerer zugänglichen Eckenbereiche vollständig und gleichmäßig mit Dichtungsmaterial bedeckt werden. Zudem kann durch geeignete Wahl des Einspritzwinkels mehr Material in die Nähe der Bipolarplatte gespritzt werden, was ein Wegdrücken der Membran und/oder ein Hinüberfließen von Dichtungsmaterial in einen Nachbarkanal verhindert.

Weiter vorteilhaft trägt auch ein Bewegen der Brennstoffzelle während des Einspritzens des Dichtungsmaterials zu einer besseren und gleichmäßigeren Verteilung des Dichtungsmaterials bei. Das Bewegen der Brennstoffzelle umfasst sowie beim Bewegen der Düse auch ein Schwenken oder Kippen der Brennstoffzelle unter Änderung des Einspritzwinkels des Dichtungsmaterials, wodurch die Verteilung des Dichtungsmaterials auch in die schwer zugänglichen Eckbereiche vereinfacht wird.

Gemäß einer vorteilhaften Weiterbildung umfasst das erfindungsgemäße Verfahren den weiteren Schritt des Trocknens (Verfestigens oder Aushärtens) des Dichtungsmaterials, wobei die Brennstoffzelle während des Trocknens des Dichtungsmaterials komprimiert wird. Der Kompressionsdruck oder Anpressdruck verdichtet die Einzelschichten der Brennstoffzelle. Somit findet ein Toleranzausgleich dadurch statt, dass das Dichtungsmaterial durch den einwirkenden Druck, wo erforderlich, seitlich verteilt wird. Dadurch können auf diese Weise die Dichtungslinien den realen Betriebsbedingungen angepasst und ein Überdosieren von Dichtungsmaterial in der Höhe vermieden werden. Der Kompressionsdruck kann dabei vorteilhafterweise einem im Brennstoffzellenstapel herrschenden Druck entsprechen, aber auch geringer oder höher sein.

Weiter vorteilhaft weist die Bipolarplatte mindestens eine Prägung auf und das Dichtungsmaterial wird nur im Bereich der Prägung eingespritzt. Die Prägung dient als Auslaufsperre des Dichtungsmaterials und begrenzt den Einspritzbereich auf vorgesehene Stellen. Zudem kann somit auch eine formschlüssige Verbindung zwischen dem Dichtungsmaterial und der Bipolarplatte hergestellt werden, die einem Herausrutschen der Dichtung bei mechanischer Einwirkung entgegenwirkt.

Das Einspritzen kann zur Reduktion der Herstellzeit der Brennstoffzelle unter hohen Drücken, wie sie beispielsweise beim Kunststoffspritzgießen angewendet werden, erfolgen. Eine Deformation, Stauchung oder ein Eindringen von Dichtungsmaterial in die Gasdiffusionsschicht sollte dabei aber vermieden werden, um die Funktionalität der Gasdiffusionsschicht nicht zu reduzieren. Eine weitere vorteilhafte Weiterbildung sieht daher vor, dass an mindestens einen Teil einer Seitenfläche mindestens eines Reaktionsfluidabdichtbereichs mindestens einer Gasdiffusionsschicht und/oder an mindestens einen Teil einer Seitenfläche eines Kühlmittelabdichtbereichs eines Kühlkanals eine Sperrschicht angebracht wird, die ein Eindringen des Dichtungsmaterials in die Gasdiffusionsschicht oder den Kühlkanal beim Einspritzen verhindert. Dieser Teil kann insbesondere den gesamten Reaktionsfluidabdichtbereich der Gasdiffusionsschicht oder den gesamten Kühlmittelabdichtbereich des Kühlkanals umfassen.

Besonders vorteilhaft wird die Sperrschicht nach dem Einspritzen des Dichtungsmaterials wieder entfernt um die Funktionalität der gasführenden Schicht nicht zu gefährden. Dies kann physikalisch und/oder chemisch erfolgen und wird vorzugsweise durch die beim Betrieb der Brennstoffzelle herrschenden Bedingungen, ausgeführt. Hierzu ist die Sperrschicht vorzugsweise aus einem Material gebildet, dass wasserlöslich und/oder thermisch instabil und/oder leicht gasifizierbar und/oder säurelabil und/oder druckempfindlich ist.

Weiter vorteilhaft ist das erfindungsgemäße Verfahren dadurch gekennzeichnet, dass zwischen eine Bipolarplatte und eine Membranelektrodenanordnung während des Einspritzens des Dichtungsmaterials ein Abstandshalter angebracht wird. Alternativ können zum selben Zweck auch mehrere Abstandshalter eingesetzt werden. Der oder die Abstandshalter dienen der Abstützung der Schichten zwischen die das Dichtungsmaterial eingespritzt wird und/oder können ein Einfließen des Dichtungsmaterials in einen benachbarten Kanal verhindern. Der oder die Abstandshalter werden nach Abschluss des Abdichtprozesses wieder auf geeignete Weise entfernt.

Ein Abstützen der Bipolarplatte und der Membranelektrodenanordnung kann alternativ oder zusätzlich zur Verwendung von Abstandshaltern auch dadurch erfolgen, dass der Reaktionsgasabdichtbereich der Gasdiffusionsschicht dadurch abgestützt wird, dass eine Seitenfläche der Gasdiffusionsschicht genauso weit hervorsteht wie die Membranelektrodenanordnung.

Ebenfalls erfindungsgemäß wird auch die Verwendung einer an einer Gasdiffusionsschicht angebrachten Sperrschicht aus einem entfernbaren Material zum Verhindern des Eindringens eines Dichtungsmaterials in die Gasdiffusionsschicht beim Einspritzen des Dichtungsmaterials an einen Reaktionsfluidabdichtbereich der Gasdiffusionsschicht derart, dass die Gasdiffusionsschicht nach außen abgedichtet wird, beschrieben. Hierdurch wird ein fluiddichtes (also gasdichtes und/oder flüssigkeitsdichtes) System bereitgestellt, das gerade im empfindlichen Bereich der Gasdiffusionsschicht beim Einspritzen des Dichtungsmaterials geschützt ist und somit ein Eindringen von Dichtungsmaterial in die Gasdiffusionsschicht oder eine Deformation derselben, verhindert.

Die Erfindung betrifft ferner ein Verfahren zur Herstellung eines Brennstoffzellensystems mit mehreren, zu einem Brennstoffzellenstapel zusammengefassten Brennstoffzellen, das durch den Schritt des Stapelns von mindestens zwei Brennstoffzellen, wobei mindestens eine Brennstoffzelle nach einem wie vorstehend beschriebenen Verfahren hergestellt wird, gekennzeichnet ist. Durch das erfindungsgemäße Verfahren zur Herstellung eines Brennstoffzellensystems wird auf einfache, kostenreduzierte und materialsparende Weise ein Brennstoffzellensystem hergestellt, das sich aufgrund des Einspritzens von Dichtungsmaterial unter Berücksichtigung lokaler Material- und Fertigungstoleranzen der Einzelkomponenten des Brennstoffzellensystems durch eine sehr gute Dichtigkeit gegenüber Reaktionsfluiden und/oder Kühlkanälen auszeichnet.

Die für die erfindungsgemäßen Verfahren zur Herstellung einer Brennstoffzelle beschriebenen Weiterbildungen, Vorteile und Effekte finden auch Anwendung auf das erfindungsgemäße Verfahren zur Herstellung eines Brennstoffzellensystems.

Zur Steigerung der Effizienz des Verfahrens kann das Einspritzen des Dichtungsmaterials durch mehrere Düsen gleichzeitig erfolgen. Wie bereits oben beschrieben können die Düsen beweglich, kippbar, schwenkbar oder drehbar ausgebildet sein, so dass ein Verändern des Einspritzwinkels möglich ist. Durch das parallele Einspritzen über ein System mit mehreren Düsen kann das Brennstoffzellensystem besonders kosteneffizient in kurzer Zeit hergestellt werden.

Aufgrund der erfindungsgemäßen Lösung sowie deren Weiterbildungen ergeben sich folgende Vorteile:
- Die erfindungsgemäßen Verfahren sind durch Verwendung von Standardprozessen einfach und kostengünstig umsetzbar.
- Die erfindungsgemäßen Verfahren ermöglichen ein präzises Anbringen von Dichtungsmaterial an die fluidführenden Schichten einer Brennstoffzelle bzw. eines Brennstoffzellensystems unter Berücksichtigung und lokaler Kompensation von Material- und Fertigungstoleranzen der Einzelkomponenten der Brennstoffzelle bzw. des Brennstoffzellensystems.
- Durch Vorkomprimierung beim Trocknen des Dichtungsmaterials kann die Dichtungshöhe auf die im Betrieb des Brennstoffzellensystems eingestellte Dichtungshöhe angepasst und somit auch Dichtungsmaterial eingespart werden.
- Ein Fertigen dünner homogener Dichtungslinien wird vereinfacht.
- Die Verfahren sind zeitextensiv und daher für die Massenfertigung geeignet.

Weitere Einzelheiten, Merkmale und Vorteile der Erfindung ergeben sich aus der nachfolgenden Beschreibung und den Figuren. Es zeigen:
- Figur 1: eine schematische Darstellung des ersten Verfahrens zur Herstellung eines Brennstoffzellensystems gemäß einer ersten Weiterbildung der Erfindung,
- Figur 2: eine schematische Darstellung des ersten Verfahrens zur Herstellung eines Brennstoffzellensystems gemäß einer zweiten Weiterbildung der Erfindung,
- Figur 3: eine schematische Darstellung des ersten Verfahrens zur Herstellung eines Brennstoffzellensystems gemäß einer dritten Weiterbildung der Erfindung,
- Figur 4: eine schematische Darstellung des ersten Verfahrens zur Herstellung eines Brennstoffzellensystems gemäß einer vierten Weiterbildung der Erfindung,
- Figur 5: eine schematische Darstellung des ersten Verfahrens zur Herstellung eines Brennstoffzellensystems gemäß einer fünften Weiterbildung der Erfindung,
- Figur 6: eine schematische Darstellung des ersten Verfahrens zur Herstellung eines Brennstoffzellensystems gemäß einer sechsten Weiterbildung der Erfindung und
- Figur 7: eine schematische Darstellung eines weiteren Verfahrens zur Herstellung eines alternativen Brennstoffzellensystems.

In den Figuren sind nur die hier interessierenden Aspekte des erfindungsgemäßen Verfahrens zum Herstellen eines Brennstoffzellensystems dargestellt, alle übrigen Aspekte sind der Übersichtlichkeit halber weggelassen. Ferner beziehen sich gleiche Bezugszeichen auf gleiche Bauteile des Brennstoffzellensystems.

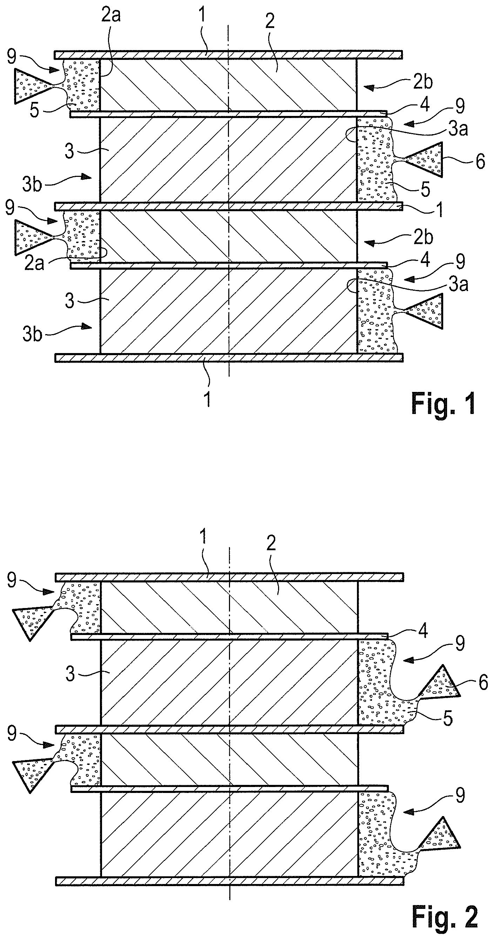

Figur 1 zeigt eine schematische Darstellung des Verfahrens zur Herstellung eines Brennstoffzellensystems gemäß einer ersten Weiterbildung der Erfindung. Im Detail gezeigt ist ein Ausschnitt eines Brennstoffzellensystems im Schnitt. Das Brennstoffzellensystem umfasst Bipolarplatten 1 und Membranelektrodenanordnungen 4 sowie jeweils dazwischenliegende Gasdiffusionsschichten 2, 3, wobei die Gasdiffusionsschicht 2 die anodenseitige Gasdiffusionsschicht und die Gasdiffusionsschicht 3 die kathodenseitige Gasdiffusionsschicht ist. Die Gasdiffusionsschichten 2, 3 sind so gebildet, dass sie gegenüber den Bipolarplatten 1 und den Membranelektrodenanordnungen 4 zurückstehen bzw. zurückgesetzt sind. Mit anderen Worten überragen die Bipolarplatten 1 und die Membranelektrodenanordnungen 4 die Gasdiffusionsschichten 2, 3, so dass zwischen den Bipolarplatten 1 und den Membranelektrodenanordnungen 4 Freiräume gebildet werden.

Jede Gasdiffusionsschicht 2, 3, weist mindestens einen Reaktionsfluidzuführbereich sowie mindestens einen Reaktionsfluidabführbereich auf zum Zuführen und Abführen von Reaktionsfluiden, die in beliebiger Form und Verteilung die jeweilige Gasdiffusionsschicht 2, 3, durchziehen. Der besseren Veranschaulichung halber sind in Figur 1 Bereiche 2b und 3b angeführt, wobei der Bereich 2b hier exemplarisch den anodenseitigen Reaktionsfluidzuführbereich und der Bereich 3b exemplarisch den kathodenseitigen Reaktionsfluidzuführbereich darstellt. Die Bereiche 9 stellen anodenseitige und kathodenseitige Reaktionsfluidabdichtbereiche dar, also Bereiche, die weder der Reaktionsfluidzuführung noch der Reaktionsfluidabführung dienen. In diesen Bereichen des Brennstoffzellensystems soll ein Austritt von Reaktionsfluid verhindert werden, um einen sicheren und leistungsstarken Betrieb des Brennstoffzellensystems zu gewährleisten, ohne dass die Reaktionsfluidzuführbereiche 2b, 3b und Reaktionsfluidabführbereiche in ihrer Funktionen behindert werden.

Wird das Brennstoffzellensystem beispielsweise als aus Einzelschichten gebildeter Würfel dargestellt, so liegen bei jeder Gasdiffusionsschicht 2, 3, vier seitliche Seiten frei. Eine obere Seite ist dabei von einer Bipolarplatte 1 und eine untere Seite von einer Membranelektrodenanordnung 4 bedeckt. Von den vier freien seitlichen Seiten dient beispielsweise eine der Reaktionsfluidzuführung und eine weitere dem Reaktionsfluidabtransport. Diese beiden Seiten sind folglich Reaktionsfluidzuführbereiche und Reaktionsfluidabführbereiche. Die beiden übrigen Seiten wären damit abzudichtende Reaktionsfluidabdichtbereiche.

In Figur 1 sind seitlich zum Brennstoffzellensystem Düsen 6 angebracht, mittels derer Dichtungsmaterial 5 in die Reaktionsfluidabdichtbereiche 9 und ggf. auch an eine Seitenfläche der jeweiligen Gasdiffusionsschicht 2a, 3a, eingespritzt wird. Dabei füllt das Dichtungsmaterial 5 die Reaktionsfluidabdichtbereiche 9 mindestens teilweise auf, jedoch in jedem Fall soweit, dass die Gasdiffusionsschichten 2, 3, nach außen abgedichtet werden.

Figur 2 zeigt eine schematische Darstellung des Verfahrens zur Herstellung eines Brennstoffzellensystems gemäß einer zweiten Weiterbildung der Erfindung. Im Unterschied zu dem in Figur 1 dargestellten Schema sind die hier gezeigten Düsen 6 schwenkbar, so dass der Einspritzwinkel des Dichtungsmaterials 5 veränderbar ist. Somit kann besonders in die schwerer erreichbaren Eckbereiche der Reaktionsfluidabdichtbereiche 9, also in die von den Gasdiffusionsschichten 2,3 und den Bipolarplatten 1 gebildeten Eckbereiche, ausreichend Dichtungsmaterial 5 eingebracht werden, wodurch Leckagen in diesem Bereich effektiv vermieden werden.

Vorzugsweise sind die Düsen 6 nicht nur schwenkbar sondern auch drehbar und in horizontaler Richtung beweglich, so dass das Dichtungsmaterial 5 selbst bei dünner Dichtungslinie Teile der Reaktionsfluidabdichtbereiche 9 und ggf. auch die Seitenflächen der Gasdiffusionsschicht 2a, 3a vollständig abdeckt.

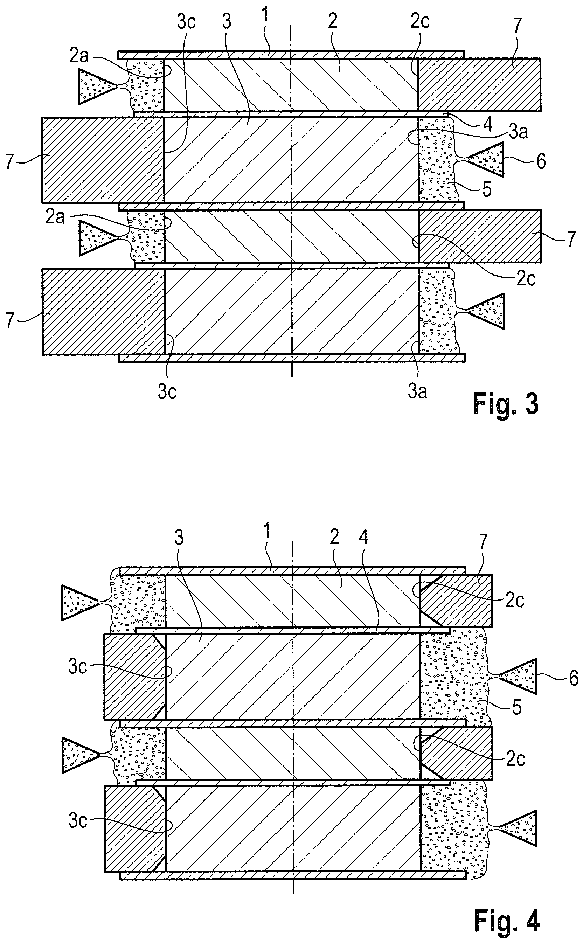

Gemäß der in Figur 3 gezeigten dritten Weiterbildung des erfindungsgemäßen Verfahrens sind zwischen die Bipolarplatte 1 und die Membranelektrodenanordnungen 4 an den den Seitenflächen der Gasdiffusionsschichten 2a, 3a, an die Dichtungsmaterial 5 angespritzt bzw. eingespritzt wird, gegenüberliegenden Seiten 2c, 3c, Abstandshalter 7 angebracht, die primär die Bipolarplatten 1 gegen die Membranelektrodenanordnungen 4 abstützen und ferner ein Eindringen von Dichtungsmaterial 5 in nicht vorgesehene Bereiche verhindern.

Die Abstandshalter 7 können in ihrer Funktion einen Abstand zwischen den Bipolarplatten 1 und den Membranelektrodenanordnungen 4 zu wahren, beweglich angeordnet sein, d.h. um die Seitenflächen der Gasdiffusionsschichten 2, 3, zirkulieren. Dadurch können die Abstandshalter während des Einspritzvorgangs in die Reaktionsfluidabdichtbereiche 9 entsprechend umliegende Bereiche abstützen.

Die Abstandshalter 7 werden vorzugsweise nach dem Einspritzen von Dichtungsmaterial, d.h. nach dem Abdichten der Gasdiffusionsschichten 2, 3, wieder entfernt.

Figur 4 zeigt eine alternative Form der Abstandshalter 7. Die Abstandshalter 7 übernehmen wiederum die Funktion ein Eindringen von Dichtungsmaterial 5 in nicht vorgesehene Bereiche zu verhindern sowie die Bipolarplatten 1 gegen die Membranelektrodenanordnungen 4 gegeneinander abzustützen.

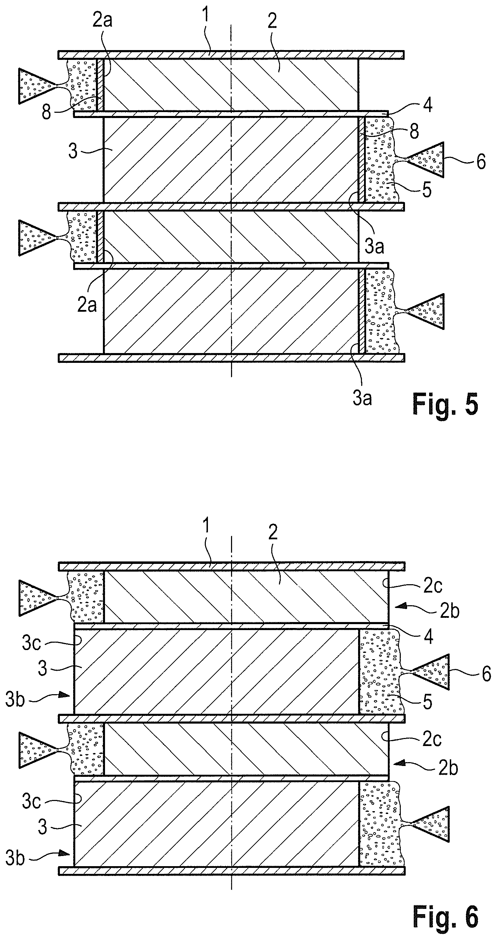

Wie Figur 5 zeigt, wurden in dieser Ausführungsform vor dem Einspritzen des Dichtungsmaterials 5 an den Seitenflächen der Gasdiffusionsschichten 2a, 3a Sperrschichten 8 angebracht, die ein Eindringen und Deformieren der Gasdiffusionsschichten 2, 3 durch das Dichtungsmaterial 5 beim Einspritzen desselben verhindern.

Das Material der Sperrschichten 8 kann nach dem Abdichten des Brennstoffzellensystems wieder entfernt werden oder an der vorgesehenen Stelle verbleiben, und ist dazu vorzugsweise aus einem physikalisch und/oder chemisch entfernbaren Material, wie beispielsweise einem wasserlöslichen und/oder thermisch instabilen und/oder leicht gasifizierbaren und/oder säurelabilen und/oder druckempfindlichen Material. Besonders vorteilhaft wird die Sperrschicht 8 durch die im Betrieb der Brennstoffzelle herrschenden Bedingungen, entfernt.

Figur 6 veranschaulicht eine zu Figur 3 alternativ oder additiv anwendbare Weiterbildung. Hier stehen die Gasdiffusionsschichten 2, 3, und genauer gesagt die Seitenflächen 2c der anodenseitigen Reaktionsfluidzuführbereiche 2b und die Seitenflächen 3c der kathodenseitigen Reaktionsfluidzuführbereiche 3b genauso weit hervor wie die Membranelektrodenanordnungen 4. Dies trägt zur Abstützung der Bipolarplatten 1 gegen die Membranelektrodenanordnungen 4 bei.

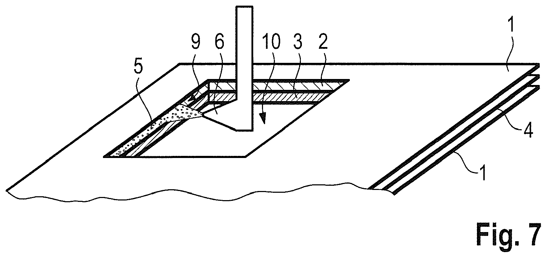

Figur 7 ist eine schematische Darstellung eines weiteren Verfahrens zur Herstellung eines alternativen Brennstoffzellensystems mit integrierten Anschlüssen für ein Reaktionsfluid. Im Detail zeigt der Ausschnitt des Brennstoffzellensystems eine den vorhergehenden Brennstoffzellensystemen analoge Schichtstruktur, die eine Membranelektrodenanordnung 4, eine anodenseitige Gasdiffusionsschicht 2, eine kathodenseitige Gasdiffusionsschicht 3 und zwei flankierende Bipolarplatten 1 aufweist. Die Gasdiffusionsschichten 2, 3 sind gegenüber den Bipolarplatten 1 und der Membranelektrodenanordnung 4 zurückgesetzt. Die Gasdiffusionsschichten weisen Reaktionsfluidzuführbereiche (nicht gezeigt), Reaktionsfluidabführbereiche (nicht gezeigt) und Reaktionsfluidabdichtbereiche 9 auf, wobei Figur 7 beispielsweise einen anodenseitigen Reaktionsfluidabdichtbereich zeigt. Das Reaktionsfluid wird dem Brennstoffzellensystem über einen Reaktionsfluidkanal 10 zugeführt. Damit Reaktionsfluid nicht aus dem Reaktionsfluidkanal 10 austreten und in nicht vorgesehene Schichten der Schichtstruktur des Brennstoffzellensystems eingeleitet wird, wird wiederum mittels einer Düse 6 Dichtungsmaterial 5 in einen Reaktionsfluidabdichtbereich 9 eingespritzt, wodurch das Brennstoffzellensystem in diesem Bereich abgedichtet wird.

Die durch die Figuren illustrierten Ausführungsformen der Erfindung beschreiben Zwei-Fluid-Brennstoffzellensysteme. Die vorliegende Erfindung ist aber auch auf Mehr-Fluid-Brennstoffzellensysteme, beispielsweise auf Drei-Fluid-Brennstoffzellensysteme, analog anwendbar.

Ferner ist es nicht erforderlich, dass das Dichtungsmaterial durch die Reaktionsfluidabdichtbereiche 9 direkt an eine Seitenfläche 2a, 3a der Gasdiffusionsschichten 2, 3, gespritzt wird. Vielmehr kann das Dichtungsmaterial 5 auch in einem Randbereich, also z.B. am Eingang der Reaktionsfluidabdichtbereiche 9, eingespritzt werden.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Bipolarplatte
- 2: Gasdiffusionsschicht anodenseitig
- 2a: Seitenfläche der anodenseitigen Gasdiffusionsschicht
- 2b: Reaktionsfluidzuführbereich anodenseitig
- 2c: Seitenfläche des anodenseitigen Reaktionsfluidzuführbereichs
- 3: Gasdiffusionsschicht kathodenseitig
- 3a: Seitenfläche der kathodenseitigen Gasdiffusionsschicht
- 3b: Reaktionsfluidzuführbereich kathodenseitig
- 3c: Seitenfläche des kathodenseitigen Reaktionsfluidzuführbereichs
- 4: Membranelektrodenanordnung
- 5: Dichtungsmaterial
- 6: Düse
- 7: Abstandshalter
- 8: Sperrschicht
- 9: Reaktionsfluidabdichtbereich
- 10: Reaktionsfluidkanal

## Patentansprüche

1. Verfahren zur Herstellung einer Brennstoffzelle, umfassend ein Anordnen je einer Gasdiffusionsschicht (2, 3) mit je einer Bipolarplatte (1), auf jeweils einer Seite einer Membranelektrodenanordnung (4), die eine Anode, eine Kathode und eine zwischen der Anode und der Kathode angeordnete Elektrolytmembran umfasst, wobei die Gasdiffusionsschichten (2, 3) gegenüber den Bipolarplatten (1) und der Membranelektrodenanordnung (4) zurückgesetzt sind, wobei die Gasdiffusionsschichten (2, 3) jeweils mindestens einen Reaktionsfluidzuführbereich (2b, 3b) und jeweils mindestens einen Reaktionsfluidabführbereich sowie jeweils mindestens einen Reaktionsfluidabdichtbereich (9) aufweisen, **gekennzeichnet durch** den Schritt des Einspritzens eines Dichtungsmaterials (5) in mindestens einen Reaktionsfluidabdichtbereich (9) mindestens einer Gasdiffusionsschicht (2, 3) derart, dass die Gasdiffusionsschicht (2, 3) nach außen abgedichtet wird, wobei die Reaktionsfluidzuführbereiche (2b, 3b) und Reaktionsfluidabführbereiche von außerhalb der Brennstoffzelle gespeist werden, wobei jede Gasdiffusionsschicht (2, 3) vier seitliche Seiten aufweist, wobei zwei Seiten Reaktionsfluidzuführbereiche (2b, 3b) und Reaktionsfluidabführbereiche sind, und wobei die übrigen zwei Seiten abzudichtende Reaktionsfluidabdichtbereiche (9) sind.

2. Verfahren nach einem der vorhergehenden Ansprüche, **dadurch gekennzeichnet, dass** an mindestens einer Bipolarplatte (1) mindestens ein Kühlkanal mit mindestens einem Kühlmittelzuführbereich und mindestens einem Kühlmittelabführbereich vorgesehen wird, wobei dass an der einen Kühlkanal mit mindestens einem Kühlmittelzuführbereich und mindestens einem Kühlmittelabführbereich aufweisenden Bipolarplatte (1) mindestens ein Kühlkanalabdichtbereich vorgesehen wird und Dichtungsmaterial (5) in mindestens einen Kühlkanalabdichtbereich der Bipolarplatte (1) derart eingespritzt wird, dass der Kühlkanal nach außen abgedichtet wird.

3. Verfahren nach einem der vorhergehenden Ansprüche, **dadurch gekennzeichnet, dass** das Einspritzen des Dichtungsmaterials (5) an einen Reaktionsfluidabdichtbereich (9) mindestens einer Gasdiffusionsschicht (2, 3) und/oder an mindestens einen Kühlkanalabdichtbereich einer Bipolarplatte (1) auch ein Einspritzen an eine Seitenfläche der Gasdiffusionsschicht (2a, 3a) und/oder eine Seitenfläche des Kühlkanals umfasst.

4. Verfahren nach einem der vorhergehenden Ansprüche, **dadurch gekennzeichnet, dass** das Einspritzen mittels einer oder mehrerer seitlich an der Brennstoffzelle angeordneten und/oder mindestens teilweise in den Reaktionsfluidabdichtbereich (9) und/oder Kühlkanalabdichtbereich eingebrachten Düsen (6) erfolgt.

5. Verfahren nach Anspruch 5, **dadurch gekennzeichnet, dass** die Düse (6) während des Einspritzens des Dichtungsmaterials (5) bewegt und/oder insbesondere unter Änderung des Einspritzwinkels geschwenkt wird.

6. Verfahren nach einem der vorhergehenden Ansprüche, **dadurch gekennzeichnet, dass** die Brennstoffzelle während des Einspritzens des Dichtungsmaterials (5) bewegt wird.

7. Verfahren nach einem der vorhergehenden Ansprüche, **gekennzeichnet durch** den weiteren Schritt des Trocknens des Dichtungsmaterials (5), wobei die Brennstoffzelle während des Trocknens des Dichtungsmaterials (5) komprimiert wird.

8. Verfahren nach einem der vorhergehenden Ansprüche, **dadurch gekennzeichnet, dass** die Bipolarplatte (1) mindestens eine Prägung aufweist und das Dichtungsmaterial (5) nur im Bereich der Prägung eingespritzt wird.

9. Verfahren nach einem der vorhergehenden Ansprüche, **dadurch gekennzeichnet, dass** an mindestens einen Teil einer Seitenfläche (2a, 3a) mindestens eines Reaktionsfluidabdichtbereichs (9) einer Gasdiffusionsschicht (2, 3) und/oder an mindestens einen Teil einer Seitenfläche eines Kühlmittelabdichtbereichs eines Kühlkanals eine Sperrschicht (8) angebracht wird, die ein Eindringen des Dichtungsmaterials (5) in die Gasdiffusionsschicht (2, 3) und/oder dem Kühlkanal beim Einspritzen verhindert.

10. Verfahren nach Anspruch 10, **dadurch gekennzeichnet, dass** die Sperrschicht (8) nach dem Einspritzen des Dichtungsmaterials (5), vorzugsweise durch die beim Betrieb der Brennstoffzelle herrschenden Bedingungen, entfernt wird.

11. Verfahren nach einem der vorhergehenden Ansprüche, **dadurch gekennzeichnet, dass** zwischen der Bipolarplatte (1) und der Membranelektrodenanordnung (4) während des Einspritzens des Dichtungsmaterials (5) ein Abstandshalter (7) angebracht wird.

12. Verfahren nach einem der vorhergehenden Ansprüche, **dadurch gekennzeichnet, dass** der Reaktionsfluidabdichtbereich (9) der Gasdiffusionsschicht (2, 3) während des Einspritzens abgestützt wird, indem eine Seitenfläche (2c, 3c) der Gasdiffusionsschicht, genauso weit hervorsteht wie die Membranelektrodenanordnurig (4).

## Claims

1. A method for producing a fuel cell, comprising the arrangement of a gas diffusion layer (2, 3) with a bipolar plate (1) on each side of a membrane electrode arrangement (4) comprising an anode, a cathode and an electrolyte membrane arranged between the anode and the cathode, wherein the gas diffusion layers (2, 3) are set back relative to the bipolar plates (1) and the membrane electrode arrangement (4), wherein the gas diffusion layers (2, 3) each have at least one reaction fluid feed region (2b, 3b) and at least one reaction fluid discharge region (9), **characterised by** the step of injecting a sealing material (5) into at least one reaction fluid sealing region (9) of at least one gas diffusion layer (2, 3), in such a way that the gas diffusion layer (2, 3) is sealed outwardly, wherein the reaction fluid feed regions (2b, 3b) and reaction fluid discharge regions are fed from outside the fuel cell, wherein each gas diffusion layer (2, 3) has four lateral sides, wherein two sides are reaction fluid feed regions (2b, 3b) and reaction fluid discharge regions, and wherein the other two sides are reaction fluid sealing regions (9) to be sealed.

2. A method according to the preceding claim, **characterised in that** at least one cooling duct with at least one coolant feed region and at least one coolant discharge region is provided on at least one bipolar plate (1), wherein at least one cooling duct sealing region is provided on the bipolar plate (1) comprising a cooling duct with at least one coolant feed region and at least one coolant discharge region, and sealing material (5) is injected into at least one cooling duct sealing region of the bipolar plate (1) in such a way that the cooling duct is sealed outwardly.

3. A method according to either one of the preceding claims, **characterised in that** the injection of the sealing material (5) at a reaction fluid sealing region (9) of at least one gas diffusion layer (2, 3) and/or at least at one cooling duct sealing region of a bipolar plate (1) also comprises an injection at a side face of the gas diffusion layer (2a, 3a) and/or a side face of the cooling duct.

4. A method according to any one of the preceding claims, **characterised in that** the injection is performed by means of one or more nozzles (6) arranged laterally on the fuel cell and/or at least partially in the reaction fluid sealing region (9) and/or cooling duct sealing region.

5. A method according to claim 5, **characterised in that** the nozzle (6) during the injection of the sealing material (5) is moved and/or more especially is pivoted, thus changing the injection angle.

6. A method according to any one of the preceding claims, **characterised in that** the fuel cell is moved during the injection of the sealing material (5).

7. A method according to any one of the preceding claims, **characterised by** the further step of drying the sealing material (5), wherein the fuel cell is compressed during the drying of the sealing material (5).

8. A method according to any one of the preceding claims, **characterised in that** the bipolar plate (1) has at least one embossed portion and the sealing material (5) is injected only in the region of the embossed portion.

9. A method according to any one of the preceding claims, **characterised in that** a barrier layer (8) is applied to at least part of a side face (2a, 3a) of at least one reaction fluid sealing region (9) of a gas diffusion layer (2, 3) and/or to at least part of a side face of a coolant sealing region of a cooling duct and prevents the sealing material (5) from infiltrating the gas diffusion layer (2, 3) and/or the cooling duct during the injecting.

10. A method according to claim 10, **characterised in that** the barrier layer (8) is removed after the injection of the sealing material (5), preferably is removed by the conditions prevailing during operation of the fuel cell.

11. A method according to any one of the preceding claims, **characterised in that** a spacer (7) is fitted between the bipolar plate (1) and the membrane electrode arrangement (4) during the injection of the sealing material (5).

12. A method according to any one of the preceding claims, **characterised in that** the reaction fluid sealing region (9) of the gas diffusion layer (2, 3) is supported during the injection **in that** a side face (2c, 3c) of the gas diffusion layer protrudes to the same extent as the membrane electrode arrangement (4).

## Revendications

1. Procédé d'obtention d'une pile à combustible comprenant un agencement de couches de diffusion gazeuse respectives (2, 3) ayant chacune une plaque bipolaire (1), sur un côté respectif d'un agencement d'électrodes membranaires (4) comprenant une anode, une cathode et une membrane électrolytique située entre l'anode et le cathode, les couches de diffusion gazeuse (2, 3) étant en retrait par rapport aux plaques bipolaires (1) et à l'agencement d'électrodes membranaires (4), les couches de diffusion gazeuse (2, 3) comprenant chacune au moins une zone d'introduction (2b, 3b) d'un fluide réactionnel et au moins une zone d'évacuation du fluide réactionnel ainsi qu'au moins une zone étanche au fluide réactionnel (9), **caractérisé en ce qu'**il comprend une étape consistant à injecter un matériau d'étanchéité (5) dans au moins une zone étanche au fluide réactionnel (9) d'au moins une couche de diffusion gazeuse (2, 3) de sorte que la couche de diffusion gazeuse (2, 3) soit rendue étanche vers l'extérieur, les zones d'introduction du fluide réactionnel (2b, 3b) et les zones d'évacuation du fluide réactionnel étant alimentées par l'extérieur de la pile à combustible, chaque couche de diffusion gazeuse (2, 3) comprenant quatre côtés latéraux, deux côtés étant des zones d'entrée du fluide réactionnel (2b, 3b) et des zones d'évacuation du fluide réactionnel et les deux autres côtés étant des zones étanches au fluide réactionnel (9) devant être rendues étanches.

2. Procédé conforme à l'une des revendications précédentes,
**caractérisé en ce qu'**
il est prévu, sur au moins une plaque bipolaire (1) au moins un canal de refroidissement ayant au moins une zone d'entrée d'un fluide de refroidissement, et au moins une zone d'évacuation d'un fluide de refroidissement,
il est prévu, sur la plaque bipolaire (1) comprenant un canal de refroidissement ayant au moins une zone d'entrée d'un fluide de refroidissement et au moins une zone d'évacuation d'un fluide de refroidissement au moins une zone d'étanchéité du canal de refroidissement, et un matériau d'étanchéité (5) est injecté dans au moins une zone d'étanchéité du canal de refroidissement de la plaque bipolaire (1) de sorte que ce canal de refroidissement soit rendu étanche vers l'extérieur.

3. Procédé conforme à l'une des revendications précédentes,
**caractérisé en ce que**
l'injection du matériau d'étanchéité (5) sur une zone étanche au fluide réactionnel (9) d'au moins une couche de diffusion gazeuse (2, 3) et/ou sur au moins une zone d'étanchéité du canal de refroidissement d'une plaque bipolaire (1) comprenant également une injection sur une surface latérale de la couche de diffusion gazeuse (2a, 3a) et/ou sur une surface latérale du canal de refroidissement.

4. Procédé conforme à l'une des revendications précédentes,
**caractérisé en ce que**
l'injection est effectuée au moyen d'au moins une buse (6) montée latéralement sur la pile à combustible et/ou au moins partiellement dans la zone étanche au fluide réactionnel (9) et/ou dans la zone d'étanchéité du canal de refroidissement.

5. Procédé conforme à la revendication 4,
**caractérisé en ce que**
pendant l'injection du matériau d'étanchéité (5) la buse (6) est déplacée et/ou basculée en particulier avec modification de l'angle d'injection.

6. Procédé conforme à l'une des revendications précédentes,
**caractérisé en ce que**
la pile à combustible est déplacée pendant l'injection du matériau d'étanchéité (5).

7. Procédé conforme à l'une des revendications précédentes,
**caractérisé**
**par** une étape supplémentaire consistant à sécher le matériau d'étanchéité (5), la pile à combustible étant comprimée pendant le séchage du matériau d'étanchéité (5).

8. Procédé conforme à l'une des revendications précédentes,
**caractérisé en ce que**
la plaque bipolaire (1) comporte au moins une empreinte et le matériau d'étanchéité (5) n'est injecté que dans la zone de cette empreinte.

9. Procédé conforme à l'une des revendications précédentes,
**caractérisé en ce que**
sur au moins une partie d'une surface latérale (2a, 3a) d'au moins une zone étanche au fluide réactionnel (9) d'une couche de diffusion gazeuse (2, 3) et/ou sur au moins une partie d'une surface latérale d'une zone étanche au fluide de refroidissement d'un canal de refroidissement est appliquée une couche de blocage (8) qui empêche la pénétration du matériau d'étanchéité (5) dans la couche de diffusion gazeuse (2, 3) et/ou la canal de refroidissement lors de l'injection.

10. Procédé conforme à la revendication 9,
**caractérisé en ce que**
la couche de blocage (8) est enlevée après l'injection du matériau d'étanchéité (5) de préférence par les conditions régnant lors fonctionnement de la pile à combustible.

11. Procédé conforme à l'une des revendications précédentes,
**caractérisé en ce qu'**
un élément d'écartement (7) est mise en place entre la plaque bipolaire (1) et l'agencement d'électrodes membranaires (4) pendant l'injection du matériau d'étanchéité (5).

12. Procédé conforme à l'une des revendications précédentes,
**caractérisé en ce que**
la zone étanche au fluide réactionnel (9) de la couche de diffusion gazeuse (2, 3) est soutenue pendant l'injection du fait qu'une surface latérale (2c, 3c) de la couche de diffusion gazeuse fait saillie aussi largement que l'agencement d'électrodes membranaires (4).
